# EUROPÄISCHE PATENTSCHRIFT

(11) **EP 2 745 969 B1**
(45) Veröffentlichungstag und Bekanntmachung des Hinweises auf die Patenterteilung: **15.11.2017**
(21) Anmeldenummer: 12198175.7
(22) Anmeldetag: 19.12.2012
(51) Int. Cl.: B23C 5/10

(54) **Fräswerkzeug**
Milling tool
Outil de fraisage

(43) Veröffentlichungstag der Anmeldung: 25.06.2014
(73) Patentinhaber: Näf, Marco, 9602 Bazenheid (CH); Bejtulai, Jetmir, 9602 Bazenheid (CH)
(72) Erfinder: Näf, Marco, 9602 Bazenheid (CH); Bejtulai, Jetmir, 9602 Bazenheid (CH)
(74) Vertreter: Frommhold, Joachim

(56) Entgegenhaltungen:
- WO-A1-2010/079374
- WO-A2-2005/122690
- DE-C1- 3 820 485
- JP-A- S5 524 847
- US-A- 3 456 316
- US-A- 3 736 634
- US-A- 4 174 915
- US-A- 5 046 902

## Beschreibung

Die Erfindung betrifft ein Fräswerkzeug gemäß dem Oberbegriff des Anspruchs 1. Ein solches Fräswerkzeug ist beispielsweise aus US 3,456,316 bekannt. Fräswerkzeuge mit Schaft sind sowohl mit helixförmigen Schneiden (US-B-7367754), stirnseitigen Scheideinsätzen (US-A-20040253062) oder auch mit Schneidrollen an der Stirnseite (JP-A-2002361511) bekannt. Ein dreischneidiges Schneidwerkzeug gemäss WO-A-2005122690 weist nach jeder Schneidkante eine rückseitige Verstärkung mit einem Abstand zum Aussendurchmesser des Werkzeugs auf. Der Abstand beträgt maximal 1/5 des Aussendurchmessers, was das Torsionsverhalten und die Biegesteifigkeit verbessern soll.
Zwecks Verringerung der Schwingungsneigung sollen zumindest einige Zähne eines Fräswerkzeuges nach DE-U-29715192 unterschiedliche Steigungen aufweisen.
Ein Schaftfräser gemäss DE-A-10325600 weist Stirnschneiden mit an diese angrenzenden Umfangsschneiden auf, welche jeweils um einen Teilungswinkel zueinander versetzt am Werkzeugumfang angeordnet sind, wobei jede Umfangsschneide einen Spanwinkel bildet und zwischen den Umfangsschneiden jeweils ein Spanraum gebildet ist. Zwischen den Umfangsschneiden sind unterschiedliche Teilungswinkel gebildet und der Spanwinkel soll negativ sein, was auch bei hoher Zerspanungsleistung einen schwingungsfreien Werkzeugbetrieb ermöglichen soll.
Ein weiterer Schruppfräser nach EP-A-2078574 ist mit einer abgeschrägten Schneidkante versehen, um deren Stabilisierung und eine verbesserte Spanabfuhr zu erreichen. Hierzu ist der abgeschrägte Bereich der Schneidkante in Längsrichtung mit einem Wellenschliff versehen. In weiterer Ausgestaltung ist die Periode des Wellenschliffs grösser als die Periode einer wellenförmigen Schruppverzahnung auf der Fräsfläche.
In der WO-A-2010079374 ist ein zylindrisches Fräswerkzeug offenbart, das zur simultanen Schrupp- wie Feinbearbeitung geeignet sein soll, wobei sich Schrupp- und Feinbearbeitungsschneide auf einem Zahn befinden. Der Radius der Schruppschneide ist dabei kleiner als der Radius der Feinbearbeitungsschneide. Die Schneiden sind etwa koaxial zur Zylinderachse angeordnet. Die Schruppschneiden sind mit Spanbrechernuten versehen und die Schruppschneide ist durch einen kleineren Spanraum von der Feinbearbeitungsschneide beabstandet.

Der Erfindung liegt die Aufgabe zugrunde, ein Fräswerkzeug, insbesondere einen Schaftfräser, Torusfräser oder dergleichen zur Bearbeitung von metallischen oder nichtmetallischen Werkstücken, zur Schrupp- wie Feinbearbeitung zu schaffen, das, im Vergleich zum Stand der Technik höhere Zerspanungsleistungen und damit geringere Fertigungszeiten in Verbindung mit höheren Standzeiten und verbesserter Masshaltigkeit der bearbeiteten Werkstückflächen ermöglicht. Die Aufgabe ist mit den Merkmalen des Patentanspruchs 1 gelöst.
Auf eine Hauptschneide folgt beabstandet eine Führungsstützleiste (als Vibrationsdämpfer), wobei der Radius der Führungsstützleiste etwas geringer als der der Hauptschneide ist. Zwischen Hauptschneide und Führungsstützleiste ist ein kleiner Entlastungsraum vorgesehen. Der Spanraum ist in üblicher Weise, in Drehrichtung des Werkzeugs vor der Hauptschneide angeordnet. Hauptschneide und Führungsstützleiste sind auf einem Zahn angeordnet. Die Führungsstützleiste ist nicht scharf, weist einen Rundungsradius auf und stellt somit keine Zusatzschneide.

Die Hauptschneide ist demzufolge für das Spanvolumen konzipiert, während die Führungsstützleiste den Rohmaterialstock nur verformt.

Vorteilhafte Ausgestaltungen sind in den abhängigen Ansprüchen offenbart. So weist das Fräswerkzeug bevorzugt einen zylindrischen Grundkörper mit mindestens einem, bevorzugt jedoch zwei oder mehreren Zähnen jeweils mit Hauptschneide und Führungsstützleiste auf.
Die Führungsstützleiste resp. der Zahn kann integraler Bestandteil eines Schaftfräsers oder dergleichen sein und/oder in einzelnen Wendeplatten o. a., die in einen Werkzeugkörper eingesetzt sind, implementiert sein.
Der bevorzugte Durchmesserbereich des Fräswerkzeuges beträgt 0,2-35mm, doch sind ebenfalls Durchmesser im Meterbereich (z. B. bis zu 10m) möglich. Die Führungsstützleiste ist zwecks Reibungsverminderung mit Freischliffen und/oder Unterbrechungen versehen. Ebenso können die Zähne und/oder die Hauptschneiden resp. die Führungsstützleisten gleichmässig und/oder ungleichmässig voneinander beabstandet sein, es können verschiedene Drallwinkel zur Anwendung gelangen und es ist auch möglich, dass einzelne Zähne nur mit einer Hauptschneide (d. h. ohne Führungsstützleiste) versehen sind. Auf einem Zahn ist mindestens eine Führungsstützleiste angeordnet, wobei es ebenso möglich ist, dass mindestens ein Zahn ohne Schneide und/oder Führungsstützleiste ausgebildet ist.
Weiterhin sind negative Winkelmasse des Spanwinkels möglich.
Der hohe Vorschub und die direkte Feinbearbeitung ermöglichen eine Verkürzung der Fertigungszeit. Der Werkzeugverschleiss ist geringer als bei bisherigen Fräswerkzeugen, was die Standzeit erhöht. Die höhere Masshaltigkeit erfordert weniger Korrekturen, was Fertigungszeit und Prozesssicherheit positiv beeinflusst.

Das erfindungsgemässe Fräswerkzeug ist bei Werkstücken z. B. aus Stahl, Guss, warmfesten Legierungen wie aus Titan oder anderen Nichteisenmetallen vorteilhaft einsetzbar, beim Schlichten (z. B. Umfangsfräsen, Abzeilen, Säumen, Trochoidalbearbeitung) wie auch bei der Schruppbearbeitung, resp. HPC-Vorgang im Maschinen- und Apparatebau, im Werkzeugbau, in der Fahrzeugindustrie, in der Luft- und Raumfahrt oder auch in der Medizintechnik.

Die Erfindung, Evocut genannt, schliesst neben Schaftfräsern auch Torusfräser, konische oder Kugelfräser und dergleichen ein. Sie erstreckt sich zudem auf entsprechend geformte Wendeplatten, Wechselköpfe, Sägeblätter o. a sowie auf vergleichbare spanabtragende Werkzeuge.

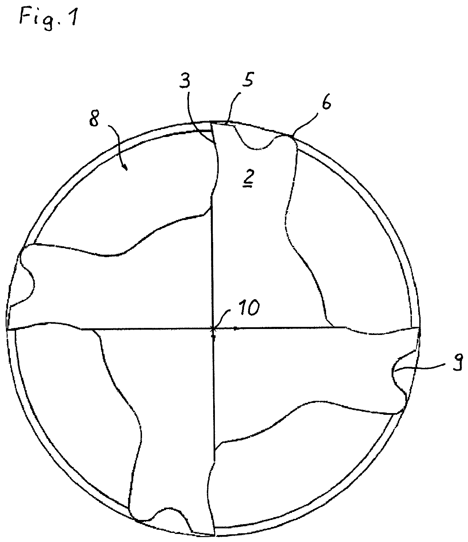

Die Erfindung wird nachfolgend in einem Ausführungsbeispiel anhand einer Zeichnung näher beschrieben. In der Zeichnung zeigen die
Fig. 1: eine Stirnansicht des Schaftfräsers

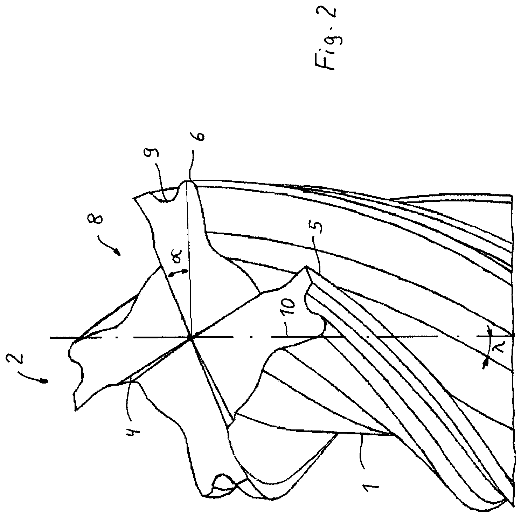

Fig. 2: eine perspektivische Teilansicht desselben

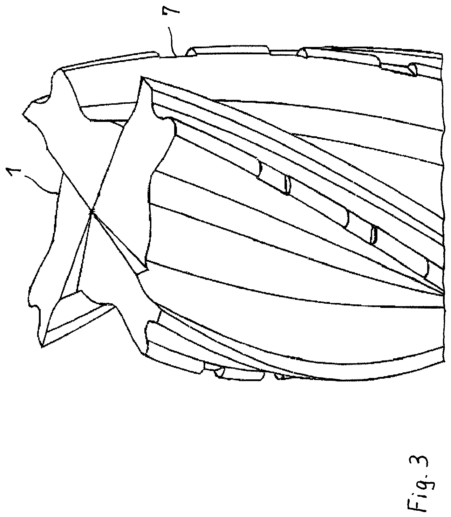

Fig. 3: eine Führungsstützleiste mit Freischliff.

Ein Schaftfräser 1 aus üblichem Werkzeugstahl, Hartmetall, Cermet, Keramik, diamantbestückt oder diamantbeschichtet o. a. ist in der Grundform zylindrisch und umfasst einen Schaft mit einem Spannbereich und einem Arbeitsbereich mit einer Stirnseite. Der Arbeitsbereich umfasst vier mit üblichem Drallwinkel Lambda(λ) (im Beispiel 35°, wobei auch davon abweichende Werte möglich sind) auf dem Umfang beabstandet voneinander angeordnete Zähne 2, die jeweils eine Hauptschneide 3 und davon beabstandet eine Führungsstützleiste 6 aufweisen. Zwischen den Zähnen 2 ist jeweils ein Spanraum 8 ausgebildet.
Die Hauptschneide 3 umfasst eine Spanfläche, Freifläche und eine Schneidkante 5 als Umfangsschneide. Der Durchmesser (durch die Werkzeugachse 10 hindurchgehend) der Führungsstützleiste 6 ist etwas geringer als der der Schneidkante 5, d. h. je nach gewolltem Vorschub Vf oder Schnittleistung 0,001mm bis 2D/3 kleiner ist.
Die konkrete Wahl ist insbesondere vom Werkzeugdurchmesser und dem Zahnvorschub fz abhängig, wobei fz wiederum von der Seitenzustellung ae abhängt. Die konkrete Kontur der Führungsstützleiste 6 ist wesentlich vom zu bearbeitenden Werkstoff (hart oder weich) und der Vibrationsminderung abhängig. Z. B. kann die Führungsstützleiste 6 bei harten Materialien einen Radius von 0,1mm und einen Öffnungswinkel von 60° aufweisen. Aus Form und Gestaltung können auch hiervon abweichende Radien und Öffnungswinkel resultieren. Wesentlich ist, dass Form und Grösse der Führungsstützleiste 6 eine Schneidwirkung meiden, resp. nicht schneidend wirken.
Die durch die erfindungsgemässe Führungsstützleiste 6 erzielbare Vibrationsdämpfung erhöht z. B. die Standzeit und Lebensdauer eines Fräsers deutlich. Die bei konventionellen Fräsern vorhandene Vibration während des Bearbeitungsvorgangs, die einen schnelleren Schneidenverschleiss bewirkt, ist wesentlich geringer oder kann gar vermieden werden.
Zwischen Hauptschneide 3 und Führungsstützleiste 6 befindet sich ein konkav gerundeter oder anderweitig geformter Entlastungsraum 9.
Der Teilungswinkel alpha (α) zwischen Hauptschneide 3 und Führungsstützleiste 6 ist immer grösser 0° und kann bei einschneidiger bzw. einzahniger Ausbildung bis zu 359,99° betragen, während er bei mehrschneidiger Ausbildung immer kleiner 180° ist.
Weitere massliche Angaben zum Fräser, die allgemein üblich sind wurden nicht gesondert erwähnt.

### Bezugszeichenliste:

- 1: Schaftfräser
- 2: Zahn
- 3: Hauptschneide
- 4: Stirnschneide
- 5: Schneidkante
- 6: Führungsstützleiste
- 7: Freischliff/Unterbrechung
- 8: Spanraum
- 9: Entlastungsraum
- 10: Werkzeugachse

- D: Durchmesser
- fz: Zahnvorschub
- alpha(α): Teilungswinkel
- lambda(λ): Drallwinkel

## Patentansprüche

1. Fräswerkzeug, insbesondere einen Schaftfräser, Torusfräser oder dergleichen zur Bearbeitung von metallischen und nicht- metallischen Werkstücken mit einem Werkzeugschaft und einem Arbeitsbereich, der mindestens eine im Umfang des Fräswerkzeugs gelegene und in einem Schraubengang verlaufende Fräsfläche auf einem Zahn mit einer Schneidkante (5) aufweist, wobei die Schneidkante (5) auf dem mindestens einem Zahn (2) ausgebildet ist,
**dadurch gekennzeichnet, dass** der Schneidkante (5) beabstandet eine gerundete Führungsstützleiste (6) mit einem Rundungsradius nachgelagert ist, wobei die Führungsstützleiste (6) einen zumindest 0,001mm kleineren Durchmesser als die Schneidkante (5) aufweist, wobei die Führungsstützleiste (6) mit Freischliffen und/oder Unterbrechungen (7) versehen ist, die gleichmässig und/oder ungleichmässig voneinander beabstandet sind.

2. Fräswerkzeug nach Anspruch 1, **dadurch gekennzeichnet, dass** die Durchmesserdifferenz zwischen Schneidkante (5) und Führungsstützleiste (6) bis 2D/3 beträgt.

3. Fräswerkzeug nach Anspruch 1 oder 2, **dadurch gekennzeichnet, dass** zwischen Schneidkante (5) und Führungsstützleiste (6) ein konkaver oder anderweitig geformter Entlastungsraum (9) ausgebildet ist.

4. Fräswerkzeug nach mindestens einem der Ansprüche 1 bis 3, **dadurch gekennzeichnet, dass** mindestens ein, bevorzugt jedoch zwei oder mehrere Zähne (2) vorgesehen sind.

5. Fräswerkzeug nach mindestens einem der Ansprüche 1 bis 4, **dadurch gekennzeichnet, dass** der Werkzeugdurchmesser 0,2-35mm beträgt, resp. sich bis in den Meterbereich erstreckt.

6. Fräswerkzeug nach mindestens einem der Ansprüche 1 bis 5, **dadurch gekennzeichnet, dass** die Zähne (2) und/oder Haupt-schneiden (3) und Führungsstützleisten (6) gleichmässig und/oder ungleichmässig voneinander beabstandet sind und/oder unterschiedliche Drallwinkel vorgesehen sein können.

7. Fräswerkzeug nach Anspruch 6, **dadurch gekennzeichnet, dass** der Teilungswinkel alpha (α) zwischen Hauptschneide (3) und Führungsstützleiste (6) grösser 0° und kleiner oder gleich 359,99° ist.

8. Fräswerkzeug nach Anspruch 1, **dadurch gekennzeichnet, dass** der Zahn (2) in einer Wendeplatte, einen Wechselkopf, ein Sägeblatt, einen Torusfräser, einen Konusfräser, einen Kugelfräsers oder dergleichen implementiert ist, sowie auf vergleichbare, spanabtragende Werkzeuge anwendbar ist.

9. Fräswerkzeug nach mindestens einem der Ansprüche 1 bis 8, **dadurch gekennzeichnet, dass** auf einem Zahn (2) mindestens eine Führungsstützleiste (6) angeordnet ist.

10. Fräswerkzeug nach mindestens einem der Ansprüche 1 bis 9, **dadurch gekennzeichnet, dass** mindestens ein Zahn (2) nur mit einer Hauptschneide (3) versehen ist.

## Claims

1. Milling tool, particularly an end mill, a torus mill or the like for the processing of metallic and nonmetallic workpieces with a tool shank and a working area, having at least one milling surface situated in the circumference of the milling tool and extending in a thread on a tooth with a cutting edge (5), whereas the cutting edge (5) is formed on the at least one tooth (2),
**characterized in that** spaced from the cutting edge (5) a rounded guide support ledge (6) with a rounding radius follows, whereas the guide support ledge (6) has an at least 0.001 mm smaller diameter than the cutting edge (5), whereas the guide support ledge (6) is equipped with free sections and/or interruptions (7), which are spaced evenly and/or unevenly from each other.

2. The milling tool according to claim 1, **characterized in that** the diameter difference between cutting edge (5) and guide support ledge (6) is up to 2D/3.

3. The milling tool according to claim 1 or 2, **characterized in that** a concave or differently shaped relief section (9) is formed between cutting edge (5) and guide support ledge (6).

4. The milling tool according to one of claims 1 to 3, **characterized in that** at least one, preferably however two or more teeth (2) are intended.

5. The milling tool according toone of claims 1 to 4, **characterized in that** the tool diameter is 0.2 - 35 mm, respectively extends to the meter range.

6. The milling tool according toone of claims 1 to 5, **characterized in** the teeth (2) and/or main cutting blade (3) and guide support ledge (6) are spaced evenly or unevenly from each other and/or different helix angles are intended.

7. The milling tool according to claim 6, **characterized in that** the division angle alpha (α) between main cutting blade (3) and guide support ledge (6) is bigger than 0° and smaller or equal to 359, 99°.

8. The milling tool according to claim 1, **characterized in that** the tooth (2) is implemented on an indexable insert, an exchangeable head, a saw blade,a torus mill, a tapered end mill, a ball end mill or the like, as well as applicable on comparable tools.

9. The milling tool according to in at least one of claims 1 to 8, **characterized in that** at least one guide support ledge (6) is disposed on a tooth (2).

10. The milling tool according toat least one of claims 1 to 9, **characterized in that** at least one tooth (2) is equipped with only one main cutting blade (3).

## Revendications

1. Outil de fraisage, en particulier une fraise en bout, une fraise torique ou analogue pour le traitement de pièces métalliques ou non-métalliques avec une tige d'outil et une zone de travail, qui présente au moins une surface de fraisage située dans la périphérie de l'outil de fraisage et évoluant dans un pas de vissur une dent avec une arête de coupe (5), l'arête de coupe (5) étant formée sur l'au moins une dent (2), **caractérisé en ce que** espacé de l'arête de coupe (5) un rebord de support et de guidage (6) arrondi avec un rayon d'arrondi est situé en aval, le rebord de support et de guidage (6) ayant un diamètre d'au moins 0.001 mm de moins que l'arête de coupe (5), le rebord de support et de guidage (6) étant pourvu de sections dégagées et/ ou d'interruptions (7) régulièrement ou irrégulièrement espacées.

2. Outil de fraisage selon la revendication 1, **caractérisé en ce que** la différence de diamètre entre arête de coupe (5) et rebord de support et de guidage (6) est au maximum égale à2D/3.

3. Outil de fraisage selon la revendication 1 ou 2, **caractérisé en ce qu'**entre arête de coupe (5) et rebord de support et de guidage (6) est formé un espace de dégagement (9) concave ou de forme différente.

4. Outil de fraisage selon au moins une des revendications 1 à 3, **caractérisé en ce qu'**au moins une, mais de préférence deux ou plusieurs dents (2) sont prévues.

5. Outil de fraisage selon au moins une des revendications 1 à 4, **caractérisé en ce que** le diamètre de l'outil est compris entre 0,2-35 mm, respectivement s'étend jusqu'à l'ordre du mètre.

6. Outil de fraisage selon au moins une des revendications 1 à 5, **caractérisé en ce que** les dents (2) et/ou lames principales (3) et rebords de support et de guidage (6) sont espacés régulièrement ou irrégulièrement et/ou que des angles d'hélices différents peuvent être prévus.

7. Outil de fraisage selon la revendication 6, **caractérisé en ce que** l'angle de divisionalpha (α) entre lame principale (3) et rebord de support et de guidage (6) est plus grand que 0° et plus petit ou égal à 359.99°.

8. Outil de fraisage selon la revendication 6, **caractérisé en ce que** la dent (2) est implémentée dans une plaquette réversible, une tête interchangeable, une lame de scie, une fraise torique, une fraise conique, une fraise à bout sphérique ou analogue, ainsi qu'applicable sur des outils comparables.

9. Outil de fraisage selon au moins une des revendications 1 à 8, **caractérisé en ce que** sur une dent (2) au moins un rebord de support et de guidage (6) est disposé.

10. Outil de fraisage selon au moins une des revendications 1 à 8, **caractérisé en ce que** au moins une dent (2) est pourvu d'une seule lame principale (3).
